# EUROPEAN PATENT APPLICATION

(11) **EP 4 156 371 A1**
(43) Date of publication of application: **29.03.2023**
(21) Application number: 21199361.3
(22) Date of filing: 28.09.2021
(51) Int. Cl.: H01M 10/42, G01K 1/14, H01M 10/48, H01M 50/213

(54) **BATTERY SYSTEM COMPRISING CYLINDRICAL CELLS AND A TEMPERATURE SENSOR AND METHOD OF INSTALLING THE SAME**

(71) Applicant: Samsung SDI Co., Ltd., Yongin-si, Gyeonggi-do 17084 (KR)
(72) Inventor: Ridisser, Markus, 8141 Premstätten (AT); Hadler, Bernhard, 8073 Feldkirchen/Graz (AT)
(74) Representative: Gulde & Partner

(57) **Abstract**

A battery system, comprising a battery pack (10) including a plurality of cylindrical battery cells (12) arranged in an array with clearances (14) between neighboring battery cells (12), an electrical conductor element (20) extending along a surface of the battery pack (10), and at least one sensor pin (16), the at least one sensor pin (16) comprising a pin head (17), a pin insertion portion (18) extending from the pin head (17) into the clearance (14), and at least one temperature sensor (22) arranged at the pin insertion portion (18) for sensing the temperature of at least one of the battery cells (12) and electrically connected to the electrical conductor element (20) via the pin head (17), wherein the pin insertion portion (18) is deformed by neighboring battery cells (12) when inserted into the clearance (14) such that it presses the temperature sensor (22) against at least one of the battery cells (12) inside the clearance (14).

## Description

### Field of the Disclosure

The present disclosure relates to a battery system comprising a battery pack including a plurality of cylindrical battery cells, and a temperature sensor for sensing the temperature of at least one of the battery cells. The disclosure further relates to a method for installing a temperature sensor in such a battery pack.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*)*.*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

A battery system further includes a battery management system (BMS), which is any electronic system that manages the rechargeable battery, battery module and battery pack, such as by protecting the batteries from operating outside their safe operating area, monitoring their states, calculating secondary data, reporting that data, controlling its environment, authenticating it and/or balancing it. For example, the BMS may monitor the state of the battery as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, a BMS may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. The BMS may be also distributed, wherein a BMS board is installed at each cell, with just a single communication cable between the battery and a controller. Or the BMS may be of modular construction including a few controllers, each handling a certain number of cells, with communication between the controllers. Centralized BMSs are most economical, least expandable, and are plagued by a multitude of wires. Distributed BMSs are the most expensive, simplest to install, and offer the cleanest assembly. Modular BMSs offer a compromise of the features and problems of the other two topologies.

A BMS may protect the battery pack from operating outside its safe operating area. Operation outside the safe operating area may be indicated in case of over-current, over-voltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as through heaters, fans, air conditioning or liquid cooling.

To provide thermal control of the battery pack a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened.

It is therefore of importance to monitor the internal temperature of the battery pack so as to be able to determine whether the battery cells work in the intended temperature range or whether they overheat and so as to be able to react accordingly. Temperature sensors for measuring the temperature of cylindrical batteries are known from e.g. US 2019/296407 A1 and US 9,373,832 B2.

US 2019/296407 A1 is concerned with a battery pack with cylindrical battery cells, the battery pack comprising a multiple-zone temperature monitoring system including temperature probes that are electrically connected to a BMS via circuit substrates extending along a top side of the battery pack. The temperature probes extend downward from these circuit substrates into clearances in between neighbouring batteries and are held in place via a structural material or adhesive which is inserted into the clearance and cured. Such a construction, in particular the fixation of the temperature probes, is complex to install.

US 9,373,832 B2 discloses pairs of battery cells comprising a temperature detection member that is pressed against the outer surface of one of the two cylindrical battery cells by a pressing rib of a temperature detection member mounting part. While such an installation of a temperature sensor is less complex it is unsuited for a larger battery pack comprising an array of many cylindrical battery cells.

It is an object of the invention to provide a constructively less complex battery system, in particular a battery system comprising a constructively simple temperature sensor arrangement, and a less complex method of installing a temperature sensor in a battery system.

### Summary of Invention

The invention is defined by the appended claims. The description that follows is subjected to this limitation. Any disclosure lying outside the scope of said claims is only intended for illustrative as well as comparative purposes.

The invention pertains to a battery system comprising a battery pack including a plurality of cylindrical battery cells arranged in an array with clearances between neighboring battery cells, an electrical conductor element extending along a surface of the battery pack, and at least one sensor pin, the at least one sensor pin comprising a pin head, a pin insertion portion extending from the pin head into the clearance, and at least one temperature sensor arranged at the pin insertion portion for sensing the temperature of at least one of the battery cells and electrically connected to the electrical conductor element via the pin head, wherein the pin insertion portion is deformed by neighboring battery cells when inserted into the clearance such that it presses the temperature sensor against at least one of the battery cells inside the clearance.

The invention further pertains to a method for installing at least one temperature sensor in a battery pack comprising a plurality of cylindrical battery cells, wherein the method comprises the steps of:
a) providing a battery pack including a plurality of cylindrical battery cells arranged in an array with clearances between neighboring battery cells;
b) inserting at least one sensor pin into one of the clearances such that a pin head of the at least one sensor pin is positioned at a surface of the battery pack and a pin insertion portion extending from the pin head is positioned inside the clearance along with at least one temperature sensor arranged at the pin insertion portion for sensing the temperature of at least one of the battery cells, wherein the pin insertion portion is deformed by neighboring battery cells when inserted into the clearance such that it presses the temperature sensor against at least one of the battery cells inside the clearance,
c) arranging an electrical conductor element along the surface of the battery pack,
d) electrically connecting the temperature sensor via the pin head to the electrical conductor element.

With the method according to the invention a temperature sensor may be installed in a battery pack to achieve a battery system according to the invention. Thus, the battery system according to the invention may be produced via the method. In the following, the battery system and the method as well as embodiments thereof will be explained. Explanations given for the battery system apply to the method as well and vice versa.

The cylindrical battery cells are arranged in an array, i.e. in a regular fashion in rows and columns of cells, preferably in a space-saving manner. However, due to the cylindrical form of the battery cells clearances remain between neighboring cells, in particular between cells of neighboring rows. For example, the battery pack may comprise multiple rows of cylindrical battery cells, every second row being offset from the first rows by approximately half of the diameter of one of the cells. This way a clearance is delimited by three cells. The array may comprise more than two cells, in particular at least three cells. According to the invention, at least one temperature sensor is inserted into at least one of such clearances. Multiple temperature sensors may be arranged inside one of the clearances, e.g. at different depths. Also, multiple of the clearances may be provided with one or more temperature sensors by inserting sensor pins in each of these clearances.

According to the invention, a sensor pin is provided which comprises at least one temperature sensor at its pin insertion portion, the sensor pin being inserted into the clearance with its pin insertion portion such that the temperature sensor is arranged inside the clearance to measure the temperature of at least one of the adjacent battery cells. The at least one temperature sensor is connected to an electrical conductor element, the electrical conductor element providing an electrical connection between the temperature sensor and e.g. a BMS so that the BMS can be provided with temperature values determined by the temperature sensor. This allows for a determination and monitoring of the internal temperature(s) of the battery pack. The electrical conductor element extends along a surface of the battery pack, or, in other words, along an end side of the battery cells. In a mounting position of the battery system inside an electric vehicle the surface may in particular be the upper surface of the battery pack, i.e the top side of the cells. The electrical conductor element may further serve as an electrical connection of one or more of the battery cells to the BMS. The temperature sensor is connected to the electrical conductor element via the pin head of the sensor pin. Sensor connecting lines may extend from the temperature sensor along the pin insertion portion to the pin head where they may be connected to the electrical conductor element as will be explained later.

For installing the temperature sensor in the battery pack, the pin insertion portion comprising the temperature sensor is inserted into one of the clearances between neighboring/adjacent battery cells. The sensor pin is in particular inserted with its pin insertion portion into the clearance so far that the pin head comes to rest on the surface of the battery pack. The length of the pin insertion portion is preferably chosen such that the temperature sensor extends far enough into the clearance to allow for a meaningful temperature measurement. In particular, the temperature sensor may be arranged at the pin insertion portion such that the temperature sensor, in the inserted position, is arranged at or close to the hottest spot of the respective battery cell. The temperature sensor may be arranged at a free end of the pin insertion portion. The free end may be a first end of the sensor pin, wherein at a second end opposite the first end the pin head is arranged.

According to the invention, the sensor pin (its pin insertion portion) is adapted to be deformed such that, in the inserted position, it presses the temperature sensor against at least one of the battery cells that delimit the clearance. Thus, in the inserted position, the pin insertion portion is deformed by neighboring/adjacent battery cells such that it presses the temperature sensor against at least one of the battery cells that delimit the clearance. In particular, the pin insertion portion may be adapted to be elastically deformed. The pin insertion portion may comprise (elastically) deformable ribs as will be explained later. The sensor pin allows for a simple and reliable installation and fixation of the temperature sensor inside the clearance. As the sensor pin presses the sensor against the outer cylindrical surface of the cell, a sufficient heat transfer is achieved from the cell to the sensor. Thus, a reliable temperature measurement may be performed.

The sensor pin is preferably a separate element, i.e. separate from the electrical conductor element. An electrical connection is established between the electrical conductor element and the sensor pin via the pin head during installation as explained above. The pin head and/or the pin insertion portion is preferably comprised of an electrically non-conductive material, in particular plastic. The pin head and the pin insertion portion may be one structural unit produced as a one-piece unit e.g. via injection molding. The sensor pin may form a pre-assembled unit comprising the pin head, the pin insertion portion, the temperature sensor and sensor connecting lines. Providing such a pre-assembled unit simplifies installation.

The sensor pin fixing its temperature sensor in the clearance is particularly simple as no further elements as e.g. an adhesive which needs to be cured is necessary. Nevertheless, a reliable or even improved temperature measurement may be achieved as the pin insertion portion presses the temperature sensor against at least one of the cells which temperature is to be measured which results in a better heat transfer from the battery to the temperature sensor.

According to an aspect of the present disclosure, the pin insertion portion comprises elastic ribs that are deformed by the neighboring battery cells when the pin insertion portion is inserted into the clearance such that the temperature sensor is pressed against at least one of the battery cells inside the clearance. As mentioned above, the pin insertion portion may comprise elastically deformable ribs. These ribs may be deformed in the inserted position of the sensor pin by one or more of the neighboring battery cells, in particular by all of the neighboring battery cells. The pin insertion portion and therefore the sensor pin may be supported or held firmly by the neighboring cells inside the clearance. According to a respective aspect of the disclosure, the elastic ribs are longitudinal ribs arranged along a longitudinal axis of the pin insertion portion. In-between the longitudinal ribs a channel may be provided in the pin insertion portion, wherein in the channel the sensor connecting lines may be arranged. According to a respective aspect of the disclosure, the elastic ribs are lateral ribs arranged orthogonally to a longitudinal axis of the pin insertion portion. The orthogonal rips are arranged successively along the longitudinal axis of the pin insertion portion. When inserting the pin insertion portion, the elastic rips may be deformed in particular by all of the neighboring cells defining the clearance the pin insertion portion is inserted into, the pin insertion portion thus contacting all of the neighboring cells. Such a pin element may be a so-called a pine tree pin. Such a pin element may hold the branch portion and the temperature sensor securely in the clearance.

According to an aspect of the present disclosure, the sensor pin comprises clipping means as fixation means spatially fixing the sensor pin inside the clearance. In particular the pin insertion portion may comprise such clipping means. Respective clipping means may be provided inside the clearance so that the clipping means of the sensor pin and the clipping means provided inside the clearance interact to spatially fix the sensor pin inside the clearance. With such fixation means the sensor pin may be held particularly securely inside the clearance.

According to another aspect of the present disclosure, the electrical conductor element is a flexible electrical conductor element, in particular a flexible flat cable, comprising a plurality of isolated conducting lines. Multiple sensor pins may be connected to the electrical conductor element, i.e. multiple temperature sensors may be provided in respective clearances, the temperature sensors being connected to the electrical conductor element via their respective pin heads. Thus, the electrical conductor element may in particular be a flexible flat cable that is arranged at the surface of the battery pack and which is connected to one or more sensor pins, connecting their temperature sensors to a BMS. Such a flexible electrical conductor element, in particular a flexible flat cable, is particularly simple to install.

According to another aspect of the present disclosure, the temperature sensor of the sensor pin is connected to the electrical conductor element via two sensor connecting lines that extend from the temperature sensor along the pin insertion portion to the pin head. The two sensor connecting lines may run inside the pin insertion portion or inside a recess in the pin insertion portion, for example in-between longitudinal ribs of the pin insertion portion. This way the sensor connecting lines are protected from the deforming pin insertion portion. According to a respective aspect of the present disclosure, the sensor connecting lines are comprised by a flexible flat cable (FFC) or a flexible printed circuit (FPC) or the sensor connecting lines are overmolded. The FFC or FPC may run inside the pin insertion portion or inside a recess in the pin insertion portion, for example in-between longitudinal ribs of the pin insertion portion, so as to be protected from the deforming pin insertion portion. Running such an FFC or FPC along the pin insertion portion from the temperature sensor to the pin head allows for a particularly simple installation.

According to another aspect of the present disclosure, the pin head is made of plastic and/or the pin insertion portion is made of plastic. This allows for a simple production, e.g. via injection molding, while providing non-conductive elements.

According to another aspect of the present disclosure, the pin insertion portion extends so far into the clearance that the temperature sensor is positioned approximately at half of the longitudinal extension/axis of the battery cell it is pressed against. Thus, the temperature sensor is arranged approximately at the middle of the battery cell with respect to its longitudinal extension/axis which usually is the hottest spot of the cell. Here a meaningful temperature measurement may be performed.

The invention further pertains to an electric vehicle comprising a battery system as explained above.

The invention further pertains a sensor pin as explained above with respect to the battery system. The sensor pin comprises a pin head, a pin insertion portion extending from the pin head into the clearance, and at least one temperature sensor arranged at the pin insertion portion for sensing the temperature of at least one battery cell of a battery pack, wherein the pin insertion portion is adapted to be deformed by neighboring battery cells when inserted into a clearance between the neighboring battery cells such that it presses the temperature sensor against at least one of the battery cells inside the clearance. The pin head may be adapted to be connected, in particular molded, to an electrical conductor element thereby connecting the temperature sensor to the electrical conductor element, the electrical conductor element connecting the temperature sensor to a BMS.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic perspective view of a battery system according to an embodiment not showing the electrical conductor element.
- Fig. 2: illustrates a schematic perspective view of the sensor pin of Fig. 1.
- Fig. 3: illustrates a schematic view of the battery system including the electrical conductor element.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

The use of "may" when describing embodiments of the present disclosure refers to "one or more embodiments of the present disclosure." In the following and the above description of embodiments of the present disclosure, the terms of a singular form may include plural forms unless the context clearly indicates otherwise. Expressions such as "at least one of," when preceding a list of elements, modify the entire list of elements and do not modify the individual elements of the list. As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/-5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof. It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

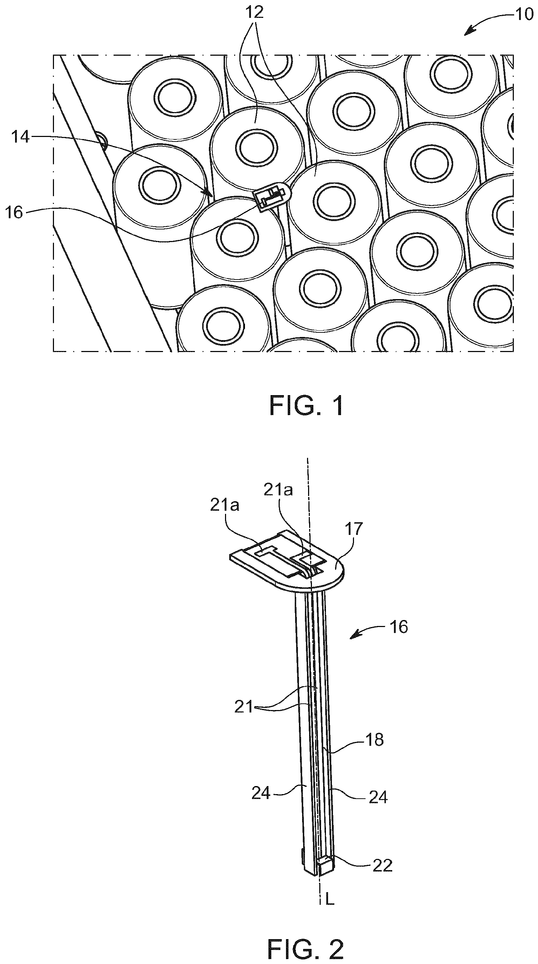

Fig. 1 is a perspective top view illustrating a battery pack 10 including a plurality of cylindrical battery cells 12 arranged in an array with clearances 14 between neighboring/adjacent battery cells 12. A sensor pin 16 comprising a pin head 17 and a pin insertion portion 18 extending vertically downward from the pin head 17 is inserted into one of the clearances 14 such that the pin insertion portion 18 extends into the clearance 14 and the pin head 17 rests on the surface of the battery pack 10, i.e. the upper end of one or more of the battery cells 12.

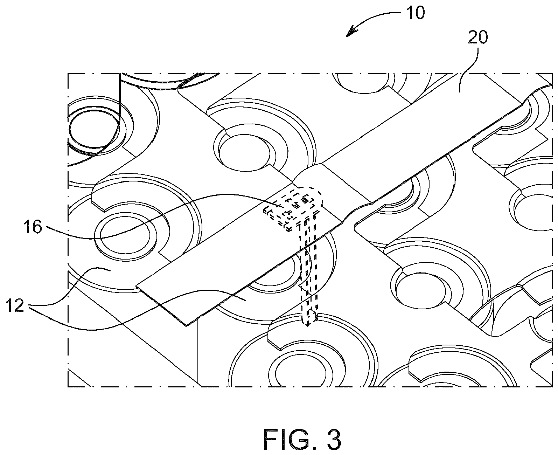

The sensor pin 16 comprises a temperature sensor 22 which is arranged at a free end of the pin insertion portion 18 as can be seen in Fig. 2. The free end of the pin insertion portion 18 forms a first end wherein at a second end of the pin insertion portion 18 opposite the first end the pin head 17 is arranged. Two sensor connecting lines 21 extend from the temperature sensor 22 along the pin insertion portion 18 to the pin head 17 where the sensor connecting lines 21 end in contact surfaces 21a for connecting the temperature sensor 22 to an electrical conductor element 20 shown in Fig. 3.

The pin insertion portion 18 further comprises two elastically deformable longitudinal ribs 24 which extend along a longitudinal axis L of the sensor pin 16, see Fig. 2. In-between these ribs 24 a recess is formed which accommodates the sensor connecting lines 21.

When installing the sensor pin 16 in the battery pack 10, the pin insertion portion 18 is inserted into one of the clearances 14 thereby deforming the longitudinal ribs 24 such that the sensor pin 16 is held firmly inside the clearance and the temperature sensor 22 is pressed against at least one of the adjacent battery cells 12. Thus, the pin insertion portion 18 is deformed by neighboring battery cells 12 when inserted into the clearance 14 such that it presses the temperature sensor 22 against at least one of the battery cells 12 inside the clearance 14.

After inserting the sensor pin 16, the electrical conductor element 20, which in this embodiment is a flexible flat cable, FFC, and comprises a plurality of isolated conducting lines (not shown) set jointly in an isolation material, is arranged at the surface of the battery pack 10 and is electrically connected to the sensor pin 16, see Fig. 3. The electrical connection between the temperature sensor 22 and the electrical conductor element 20 is established by (laser) welding the two contact surfaces 21a of the sensor connecting lines 21 to respective conducting lines of the electrical conductor element 20. Via the electrical conductor element 20 the temperature sensor 22 may be connected to a BMS.

The sensor pin 16 allows for a simple and reliable fixation of the temperature sensor 22 inside the clearance 14. In particular, no further elements as e.g. an adhesive are necessary. As the pin insertion portion 18 presses the temperature sensor 22 against the outer cylindrical surface of one of the battery cells 12, a sufficient heat transfer is achieved from the battery cell 12 to the temperature sensor 22. Thus, a reliable temperature measurement may be performed. The length of the pin insertion portion 18 and the arrangement of the temperature sensor 22 on the pin insertion portion 18 may be chosen such that the temperature sensor 22 extends far enough down into the clearance 14 to be close to the hottest spot of the cell it is pressed against. In particular, the pin insertion portion 18 may extend so far in the clearance 14 that the temperature sensor 22 is positioned approximately at half of the length of the battery cell with respect to its longitudinal axis L. At such a position a meaningful temperature can be measured.

Due to the arrangement inside the recess between the longitudinal ribs 24, the sensor connecting lines 21 are not damaged by the deformation of said ribs 24. The sensor connecting lines 21 may be comprised in an FFC or and FPC or they may be overmolded.

### Reference signs

- 10: battery pack
- 12: cylindrical battery cells
- 14: clearance(s)
- 16: sensor pin
- 17: pin head
- 18: pin insertion portion
- 20: electrical conductor element
- 21: sensor connecting lines
- 21a: contact surfaces
- 22: temperature sensor
- 24: ribs
- L: longitudinal axis

## Claims

1. A battery system, comprising a battery pack (10) including a plurality of cylindrical battery cells (12) arranged in an array with clearances (14) between neighboring battery cells (12), an electrical conductor element (20) extending along a surface of the battery pack (10), and at least one sensor pin (16), the at least one sensor pin (16) comprising a pin head (17), a pin insertion portion (18) extending from the pin head (17) into the clearance (14), and at least one temperature sensor (22) arranged at the pin insertion portion (18) for sensing the temperature of at least one of the battery cells (12) and electrically connected to the electrical conductor element (20) via the pin head (17), wherein the pin insertion portion (18) is deformed by neighboring battery cells (12) when inserted into the clearance (14) such that it presses the temperature sensor (22) against at least one of the battery cells (12) inside the clearance (14).

2. The battery system according to claim 1, wherein the pin insertion portion (18) comprises elastic ribs (24) that are deformed by the neighboring battery cells (12) when the pin insertion portion (18) is inserted into the clearance (14).

3. The battery system according to claim 2, wherein the elastic ribs are longitudinal ribs (24) arranged along a longitudinal axis (L) of the pin insertion portion (18).

4. The battery system according to claim 2, wherein the elastic ribs are lateral ribs arranged orthogonally to a longitudinal axis (L) of the pin insertion portion (18).

5. The battery system according to any one of the preceding claims, wherein the sensor pin (16) comprises clipping means as fixation means spatially fixing the sensor pin (16) inside the clearance (14).

6. The battery system according to any one of the preceding claims, wherein the electrical conductor element (20) is a flexible electrical conductor element, in particular a flexible flat cable, comprising a plurality of isolated conducting lines.

7. The battery system according to any one of the preceding claims, wherein two sensor connecting lines (21) extend from the temperature sensor (22) along the pin insertion portion (18) to the pin head (17) and electrically connect the temperature sensor (22) to the electrical conductor element (20).

8. The battery system according to claim 8, wherein the sensor connecting lines (21) are comprised by a flexible flat cable (FFC) or a flexible printed circuit (FPC).

9. The battery system according to claim 8, wherein the sensor connecting lines (21) are overmolded.

10. The battery system according to any one of the preceding claims, wherein the pin head (17) is made of plastic and/or the pin insertion portion (18) is made of plastic.

11. The battery system according to any one of the preceding claims, wherein the pin insertion portion (18) extends so far into the clearance (14) that the temperature sensor (22) is positioned approximately at half of the length of the cylindrical axis of the battery cell (12) it is pressed against.

12. An electric vehicle comprising the battery system according to any one of the preceding claims.

13. A sensor pin (16),comprising a pin head (17), a pin insertion portion (18) extending from the pin head (17) into the clearance (14), and at least one temperature sensor (22) arranged at the pin insertion portion (18) for sensing the temperature of at least one battery cell (12) of a battery pack (10), wherein the pin insertion portion (18) is adapted to be deformed by neighboring battery cells (12) when inserted into a clearance (14) between the neighboring battery cells (12) such that it presses the temperature sensor (22) against at least one of the battery cells (12) inside the clearance (14).

14. A method for installing at least one temperature sensor (22) in a battery pack (10) comprising a plurality of cylindrical battery cells (12), wherein the method comprises the steps of:
a) providing a battery pack (10) including a plurality of cylindrical battery cells (12) arranged in an array with clearances (14) between neighboring battery cells (12);
b) inserting at least one sensor pin (16) into one of the clearances (14) such that a pin head (17) of the at least one sensor pin (16) is positioned at a surface of the battery pack (10) and a pin insertion portion (18) extending from the pin head (17) is positioned inside the clearance (14) along with at least one temperature sensor (22) arranged at the pin insertion portion (18) for sensing the temperature of at least one of the battery cells (12), wherein the pin insertion portion (18) is deformed by neighboring battery cells (12) when inserted into the clearance (14) such that it presses the temperature sensor (22) against at least one of the battery cells (12) inside the clearance,
c) arranging an electrical conductor element (20) along the surface of the battery pack (10),
d) electrically connecting the temperature sensor (22) via the pin head (17) to the electrical conductor element (20).

15. The method according to claim 14, wherein the step of electrically connecting the temperature sensor (22) via the pin head (17) to the electrical conductor element (20) comprises welding two sensor connecting lines (21) to the electrical conductor element (20), the sensor connecting lines (21) extending from the temperature sensor (22) to the pin head (17) along the pin insertion portion (18).

## Amended claims

### Amended claims in accordance with Rule 137(2) EPC.

1. A battery system, comprising a battery pack (10) including a plurality of cylindrical battery cells (12) arranged in an array with clearances (14) between neighboring battery cells (12), an electrical conductor element (20) extending along a surface of the battery pack (10), and at least one sensor pin (16), the at least one sensor pin (16) comprising a pin head (17), a pin insertion portion (18) extending from the pin head (17) into the clearance (14), and at least one temperature sensor (22) arranged at the pin insertion portion (18) for sensing the temperature of at least one of the battery cells (12) and electrically connected to the electrical conductor element (20) via the pin head (17), wherein the pin insertion portion (18) is deformed by neighboring battery cells (12) when inserted into the clearance (14) such that it presses the temperature sensor (22) against at least one of the battery cells (12) inside the clearance (14), wherein the pin insertion portion (18) comprises elastic ribs (24) that are deformed by the neighboring battery cells (12) when the pin insertion portion (18) is inserted into the clearance (14).

2. The battery system according to claim 1, wherein the elastic ribs are longitudinal ribs (24) arranged along a longitudinal axis (L) of the pin insertion portion (18).

3. The battery system according to claim 1, wherein the elastic ribs are lateral ribs arranged orthogonally to a longitudinal axis (L) of the pin insertion portion (18).

4. The battery system according to any one of the preceding claims, wherein the sensor pin (16) comprises clipping means as fixation means spatially fixing the sensor pin (16) inside the clearance (14).

5. The battery system according to any one of the preceding claims, wherein the electrical conductor element (20) is a flexible electrical conductor element, in particular a flexible flat cable, comprising a plurality of isolated conducting lines.

6. The battery system according to any one of the preceding claims, wherein two sensor connecting lines (21) extend from the temperature sensor (22) along the pin insertion portion (18) to the pin head (17) and electrically connect the temperature sensor (22) to the electrical conductor element (20).

7. The battery system according to claim 6, wherein the sensor connecting lines (21) are comprised by a flexible flat cable (FFC) or a flexible printed circuit (FPC).

8. The battery system according to claim 6, wherein the sensor connecting lines (21) are overmolded.

9. The battery system according to any one of the preceding claims, wherein the pin head (17) is made of plastic and/or the pin insertion portion (18) is made of plastic.

10. The battery system according to any one of the preceding claims, wherein the pin insertion portion (18) extends so far into the clearance (14) that the temperature sensor (22) is positioned approximately at half of the length of the cylindrical axis of the battery cell (12) it is pressed against.

11. An electric vehicle comprising the battery system according to any one of the preceding claims.

12. A method for installing at least one temperature sensor (22) in a battery pack (10) comprising a plurality of cylindrical battery cells (12), wherein the method comprises the steps of:
a) providing a battery pack (10) including a plurality of cylindrical battery cells (12) arranged in an array with clearances (14) between neighboring battery cells (12);
b) inserting at least one sensor pin (16) into one of the clearances (14) such that a pin head (17) of the at least one sensor pin (16) is positioned at a surface of the battery pack (10) and a pin insertion portion (18) extending from the pin head (17) is positioned inside the clearance (14) along with at least one temperature sensor (22) arranged at the pin insertion portion (18) for sensing the temperature of at least one of the battery cells (12), wherein the pin insertion portion (18) is deformed by neighboring battery cells (12) when inserted into the clearance (14) such that it presses the temperature sensor (22) against at least one of the battery cells (12) inside the clearance, wherein the pin insertion portion (18) comprises elastic ribs (24) that are deformed by the neighboring battery cells (12) when the pin insertion portion (18) is inserted into the clearance (14),
c) arranging an electrical conductor element (20) along the surface of the battery pack (10),
d) electrically connecting the temperature sensor (22) via the pin head (17) to the electrical conductor element (20).

13. The method according to claim 12, wherein the step of electrically connecting the temperature sensor (22) via the pin head (17) to the electrical conductor element (20) comprises welding two sensor connecting lines (21) to the electrical conductor element (20), the sensor connecting lines (21) extending from the temperature sensor (22) to the pin head (17) along the pin insertion portion (18).
